# EUROPÄISCHE PATENTSCHRIFT

(11) **EP 0 871 676 B1**
(45) Veröffentlichungstag und Bekanntmachung des Hinweises auf die Patenterteilung: **13.03.2002**
(21) Anmeldenummer: 96944045.2
(22) Anmeldetag: 20.12.1996
(51) Int. Cl.: C08G 63/553, C08F 299/04, C08L 67/07, C08F 290/02

(54) **VERWENDUNG VON REAKTIVEN, PRÄPOLYMEREN ORGANISCHEN VERBINDUNGEN**
USE OF REACTIVE PREPOLYMERIC ORGANIC COMPOUNDS
UTILSATION DE COMPOSES ORGANIQUES PREPOLYMERES REACTIFS

(30) Priorität: 04.01.1996 DE 19600146
(43) Veröffentlichungstag der Anmeldung: 21.10.1998
(73) Patentinhaber: BASF AKTIENGESELLSCHAFT, 67056 Ludwigshafen (DE)
(72) Erfinder: BLUM, Rainer, D-67069 Ludwigshafen (DE); LOERZER, Thomas, D-76829 Landau (DE); HEGEMANN, Günther, D-22301 Hamburg (DE); BAUMGARTEN, Gunther, D-20255 Hamburg (DE)
(74) Vertreter: Isenbruck, Günter, Dr.
(86) Internationale Anmeldenummer: EP9605769
(87) Internationale Veröffentlichungsnummer: WO9725361

(56) Entgegenhaltungen:
- EP-A- 0 166 449
- EP-A- 0 260 688
- EP-A- 0 302 484
- US-A- 4 801 629

## Beschreibung

Die vorliegende Erfindung betrifft die Verwendung reaktiver, präpolymerer organischer Verbindungen zur Vernetzung, mit oder ohne radikalliefernde Initiatoren, durch Wärme, energiereiche Strahlung oder Wärme und energiereiche Strahlung.

Solche Stoffe können sowohl unter energiereicher Strahlung, bevorzugt UV-Licht, als auch radikalisch bei Raumtemperatur mit bekannten Kombinationen von Peroxyden und Co-Initiatoren wie z.B. Schwermetallsalzen, sowie durch Wärme mit thermisch radikalliefernden Startern wie Peroxyden, Azostartern oder C-C-labilen Verbindungen reagieren, d.h. weiterpolymerisieren oder vernetzen. Die genannten Methoden zum Reaktionsstart können auch in beliebiger Kombination verwendet werden, wobei sowohl die kombinierte Anwendung von thermisch erzeugten Radikalen mit durch UV-Licht erzeugten Radikalen als auch die Reaktion zu einem B-Zustand, d.h. einem teilreagierten Zustand, bei dem die Reaktion unterbrochen ist und später wieder gestartet werden kann, möglich ist.

Diese reaktiven Präpolymeren können als Lackbindemittel, Überzugsmassen, zur Herstellung kompakter oder zelliger, verstärkter oder unverstärkter Formstoffe, Vergußmassen, Elektroisoliermassen, tageslichthärtbarer Straßenmarkierungsfarben, Dicht- und Überzugsmittel, als Druckfarbenbindemittel, Bindemittel für Faservliese, Klebemittel, Prepregs u. a.m. Verwendung finden.

Ungesättigte Polyesterharze mit Struktureinheiten des Dihydrodicyclopentadiens (DHCPD), die in der Regel gelöst in monomeren Reaktivverdünnern wie Styrol, α-Methylstyrol, Vinyltoluol, Allyphthalat, Acrylaten, Vinylaten o.ä. verwendet werden, sind Gegenstand zahlreicher Patente. Die Mitverwendung dieser Reaktivverdünner, die im Falle von z.B. Pulverlacken auch feste Stoffe sein können, wird nach dem Stand der Technik wegen der unzureichenden Homopolymerisationsfähigkeit der Malein- bzw. Fumarsäuredoppelbindungen für unumgänglich gehalten.

Die DE 31 07 450 bezieht sich auf ungesättigte Polyester mit Oligomeren des Cyclopentadiens als Endgruppen, die als Lösungen in ethylenisch ungesättigten Monomeren zur Herstellung von Formkörpern und Überzügen Verwendung finden können; deren Verwendung ohne Reaktivverdünner ist aus dieser Schrift jedoch nicht abzuleiten.

Die EP 101 585-A betrifft ungesättigte Polyesterharze, die durch Addition von Cyclopentadien an die Doppelbindung des Polyesters modifiziert und dann in Vinylmonomeren aufgelöst werden.

In der EP 118 786-A werden ungesättigte Polyesterharze beschrieben, die mit Dicyclopentadien modifiziert sind und in Vinyl- oder Allylmonomeren gelöst in einem zweistufigen Verfahren zu Formstoffen mit hoher Temperaturbeständigkeit gehärtet werden.

Auch die EP 260 688-A bezieht sich auf Polyesterharze, die in vinylischen Monomeren gelöst sind.

In der DE 32 30 924-A wird ein spezielles Verfahren zur Herstellung von in Vinylmonomeren gelösten Polyesterharzen mit Cyclopentadienstrukturen beschrieben.

Die EP 585 742-A betrifft Mischungen von festen Stoffen, die ungesättigte Polyesterharze und Polyurethanacrylatharze enthalten. Diese Mischungen sind als Pulverlacke geeignet, die nach dem Aufschmelzen in Gegenwart von UV-Initiatoren unter UV-Licht vernetzen.

In der EP 0684284-A1 werden synergistische Mischungen aus ungesättigten Polyetheresterharzen und Dicyclopentadienpolyesterharzen beschrieben, die in Styrol gelöst und in Gegenwart von peroxidischen Katalysatoren gehärtet werden.

In der DE-A-15 70 273 sind Polyester beschrieben, die endständig 5- oder 6-gliedrige Imidringe, z.B. abgeleitet von Tetrahydrophthalsäureimidoethanol, aufweisen und gelöst in ungesättigten Monomeren verwendet werden.

Gegenstand der vorliegenden Erfindung ist ein Verfahren zur Herstellung von vernetzten polymeren organischen Verbindungen durch Vernetzen von präpolymeren, reaktiven organischen Verbindungen, die Struktureinheiten mit mindestens einer ethylenischen Doppelbindung aufweisen, mit polymeren organischen Verbindungen, die Struktureinheiten mit mindestens einem leicht abstrahierbaren H-Atom mit einer Bindungsenergie von maximal 397 kJ/mol enthalten, mit oder ohne radikalliefernde Initiatoren, durch Wärme und/oder energiereiche Strahlung, in Abwesenheit von ethylenisch ungesättigten monomeren Reaktivverdünnern.

Bevorzugt sind dabei solche reaktiven, präpolymeren organischen Verbindungen, die als leicht abstrahierbare H-Atome, H-Atome in α-Stellung zu einer Doppelbindung (allylständige Wasserstoffe) enthalten, insbesondere solche, die die leicht abstrahierbaren Wasserstoffatome über Strukturen der Formeln (I), (II), (III) und/oder (IV) in die Präpolymeren eingebaut enthalten, 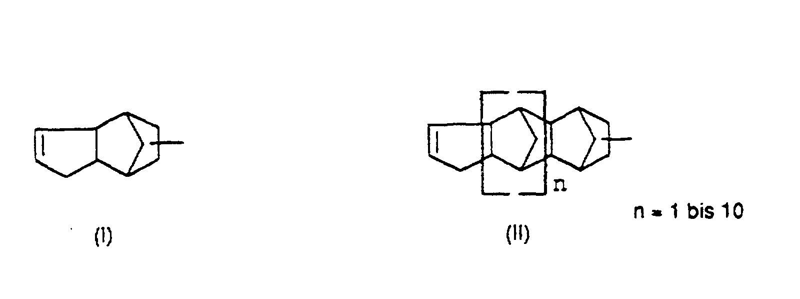 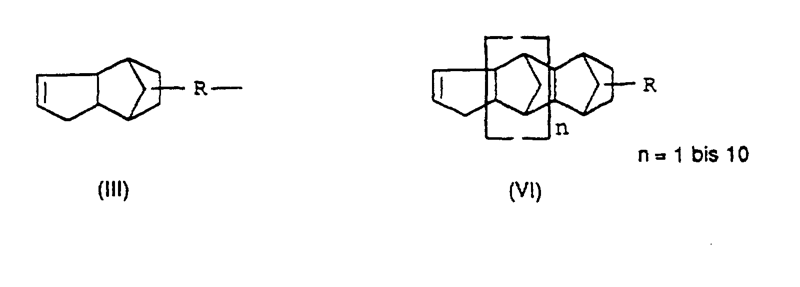 wobei -R- für Sauerstoff oder einen zweiwertigen Rest mit einer oder mehreren Ester-, Amid-, Urethan-, Ketongruppen oder eine salzartige Bindung steht, oder über Strukturen der Formeln (V), (VI), (VII), (VIII), (IX), (X) oder über Ester des Isoprenols (Va) 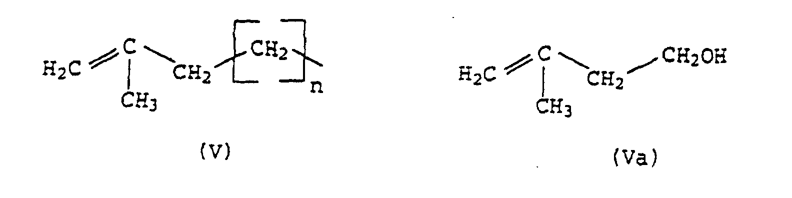 mit n = 1 bis 20, 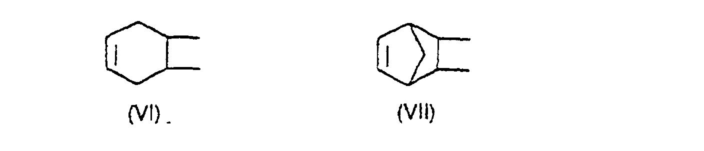 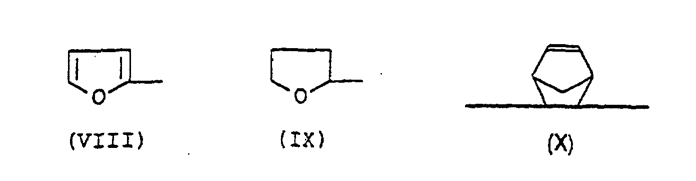 eingebaut sind.

Die in dem erfindungsgemäßen Verfahren einzusetzenden reaktiven, präpolymeren organischen Verbindungen können ungesättigte Polyesterharze auf Basis von α,β-olefinisch ungesättigten Dicarbonsäuren sein, in die mindestens eine der Gruppen mit leichtabstrahierbaren H-Atomen der Formeln (I) bis (X) eingebaut ist, sein oder Gemische aus ungesättigten Polyesterharzen auf Basis von α,β-olefinisch ungesättigten Dicarbonsäuren ohne Gruppen mit leichtabstrahierbaren H-Atomen und präpolymeren organischen Verbindungen, die Gruppen mit leicht abstrahierbaren H-Atomen eingebaut enthalten.

Diese präpolymeren organischen Verbindungen können sich auch von monofunktionellen Alkoholen, polyfunktionellen Alkoholen, deren Alkoxylierungsprodukten, Polyetherpolyolen, Polyesterpolyolen, Polytetrahydrofuran und/oder Polycaprolakton ableiten, die terminal über Ester α,β-olefinisch ungesättigter Dicarbonsäuren gebundene Strukturteile mit leicht abstrahierbaren H-Atomen enthalten.

Die in dem erfindungsgemäßen Verfahren eingesetzten reaktiven, präpolymeren Stoffe können entweder für sich allein oder zusammen mit anderen Bindemitteln und/oder organischen und/oder anorganischen Füllstoffen, als Lackbindemittel, Überzugsmassen, zur Herstellung kompakter oder zelliger, verstärkter oder unverstärkter Formstoffe, Vergußmassen, Elektroisoliermassen für elektrische Wicklungen, Drahtlacke zur Isolierung von Wicklungsdrähten in der Elektrotechnik, tageslichthärtbare Straßenmarkierungsfarben, Dicht- und Überzugsmittel, als Druckfarbenbindemittel, Klebemittel, als Bindemittel für geordnete und wirre, flächige oder beliebig geformte Faserträgermaterialien aus organischen oder anorganischen Stoffen verwendet werden.

Die in dem erfindungsgemäßen Verfahren eingesetzten reaktiven, präpolymeren organischen Verbindungen können mit üblichen radikalliefernden Stoffen, C-C-labilen Stoffen und Reaktionsbeschleunigern, Stabilisatoren sowie weiteren Zusatzstoffen aus der Gruppe Viskositätsregler, Verlaufs- und Glanzverbesserer zusammen eingesetzt werden.

Außerdem in dem erfindungsgemäßen Verfahren eingesetzten reaktiven, präpolymeren organischen Verbindungen bei der Härtung zusammen mit einem oder mehreren an sich bekannten Härtungsmechanismen aus der Gruppe Covernetzung mit polyfunktionellen Isocyanaten, Aminoplastharzen und polyfunktionellen Epoxyden eingesetzt werden.

Die in dem erfindungsgemäßen Verfahren einzusetzenden reaktiven, präpolymeren organischen Verbindungen können Struktureinheiten mit mindestens einem leicht abstrahierbaren H-Atom mit einer Bindungsenergie von maximal 397 kJ/mol und mindestens einer ethylenischen Doppelbindung im gleichen Molekül enthalten.

Angaben zur Bindungsenergie sind literaturbekannt und z.B. zu entnehmen Morrison, Robert Thornton, Organic Chemistry (Tabelle: Homolytic Bond Dissociation Energies auf der Innenseite des Umschlags) in Library of Congress Cataloging-in-Publication Data ISBNO-205-08453-2 (1987) by Allyn and Bacon, Inc. A. Division of Simon & Schuster, Newton, Massachusetts, U.S.A.

Diese Reaktionspartner können im gleichen Molekül enthalten sein. Die reaktiven, präpolymeren Stoffe (organischen Verbindungen) können aber auch aus Mischungen von Präpolymeren bestehen, welche nur die leicht abstrahierbaren H-Atome enthalten, mit Präpolymeren, die nur die ethylenischen Doppelbindungen tragen.

Weiter ist es möglich, bei der Härtung einen oder mehrere an sich bekannte Härtungsmechanismen mitzuverwenden, z.B. Covernetzung mit polyfunktionellen Isocyanaten, Aminoplastharzen, wie Melamin-, Harnstoff- oder Benzoguanaminformaldehydharze, polyfunktionellen Epoxyden u.a.. Die zusätzlich anwendbaren Vernetzungsmechanismen können auch zur Ausbildung sich durchdringender Netzwerke in den Überzügen führen, wodurch oft spezielle, wünschenswerte Eigenschaften, z.B. besonders hohe Chemikalienfestigkeit, erreicht werden.

Die erfindungsgemäßen Struktureinheiten mit mindestens einem leicht abstrahierbaren H-Atom mit einer Bindungsenergie von maximal 397kJ /mol sind z.B. eingebaut über Strukturen der Formeln (I) bis (IV), die sich von Dihydrodicyclopentadien ableiten, 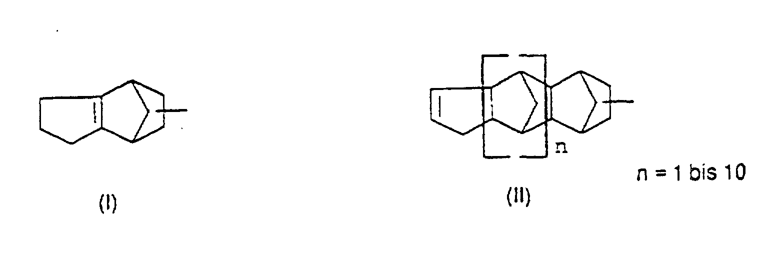 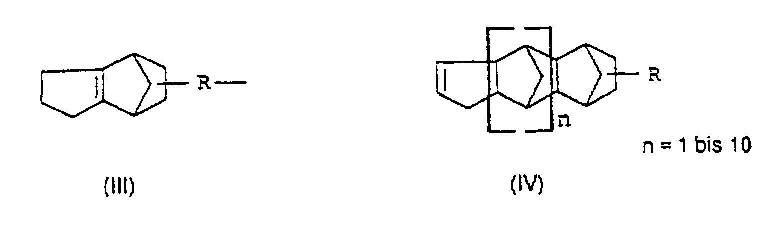 wobei -R- steht für Sauerstoff oder einen zweiwertigen Rest mit einer oder mehreren Ester-, Amid-, Urethan-, Ketongruppen oder eine salzartige Bindung.

Weitere Strukturen, die über die leicht abstrahierbare H-Atome in die erfingungsgemäßen Stoffe eingebaut sein können, sind z.B. Reste aus der Gruppe der Isoalkyle, Aminoisoalkyle, Cycloisoalkyle, Cycloisoalkyle mit einem oder mehreren Heteroatomen, Isoalkylaryle oder Strukturen der folgenden Formeln, worin
n = 2 oder 3
R² = ein bivalenter aliphatischer oder aromatischer Rest, beispielsweise mit bis zu 8 Kohlenstoffatomen, oder eine Einfachbindung
R³ = ein bivalenter aliphatischer, cycloaliphatischer, heterocyclischer oder aromatischer Rest, der gegebenenfalls substituiert ist, oder eine Einfachbindung
R⁴ = H, geradekettiges oder verzweigtes Alkyl, beispielsweise mit 1 bis 8 Kohlenstoffatomen, halogensubstituiertes Aryl oder Isoamylphenyl
R⁵ = Alkyl, halogensubstituiertes Alkyl, halogensubstituiertes Aryl oder Isoamylphenyl
bedeutet, beispielsweise 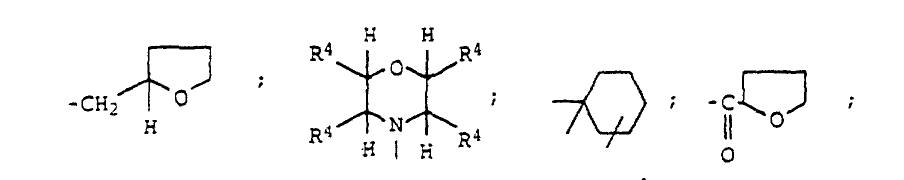 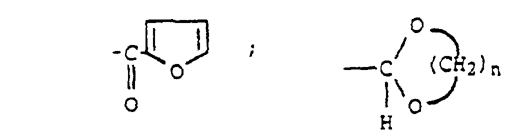 (n = 2 oder 3);

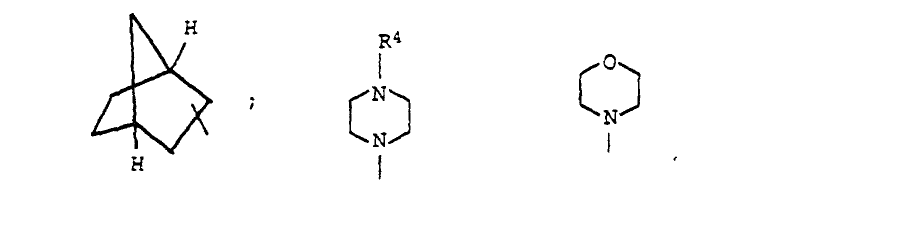

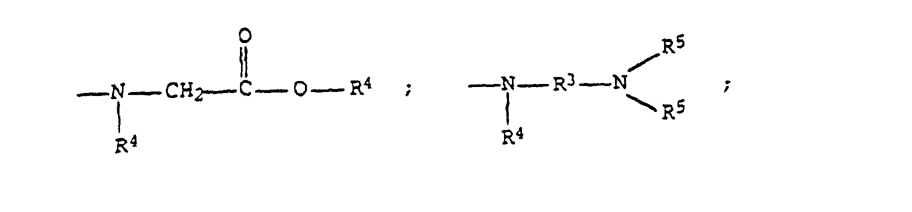

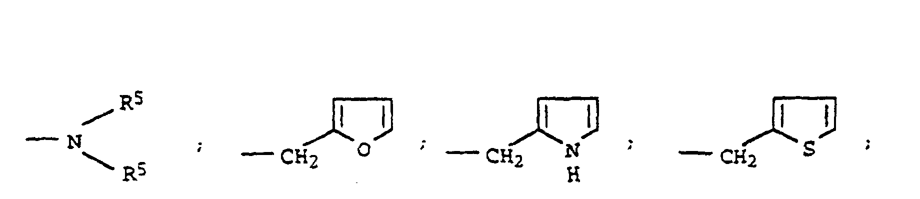

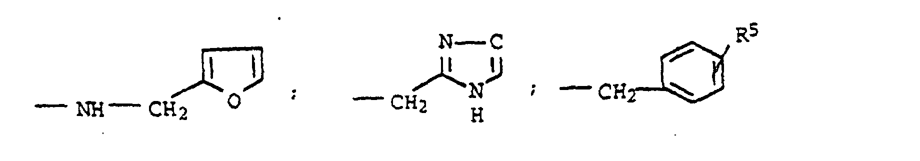

Die in dem erfindungsgemäßen Verfahren einzusetzenden reaktiven, präpolymeren organischen Verbindungen können sowohl linear als auch einfach oder mehrfach verzweigt sein und haben beispielhaft die in den Formeln (X) und (XI) wiedergegebenen Strukturen, worin -R- für eine Brückengruppe oder Einfachbindung und D- für eine Struktur mit leicht abstrahierbaren H-Atomen steht. Die ethylenischen Doppelbindungen können dabei sowohl in den Resten -R- als auch an anderer Stelle im Molekül vorhanden sein oder in beliebigen präpolymeren Stoffen ohne die Reste D-, die mit präpolymeren Stoffen gemischt sind, die Gruppen D-enthalten. Die in den Formeln (XI) und (XII) wiedergegebenen Strukturen sollen lediglich beispielhaft das Prinzip verdeutlichen.

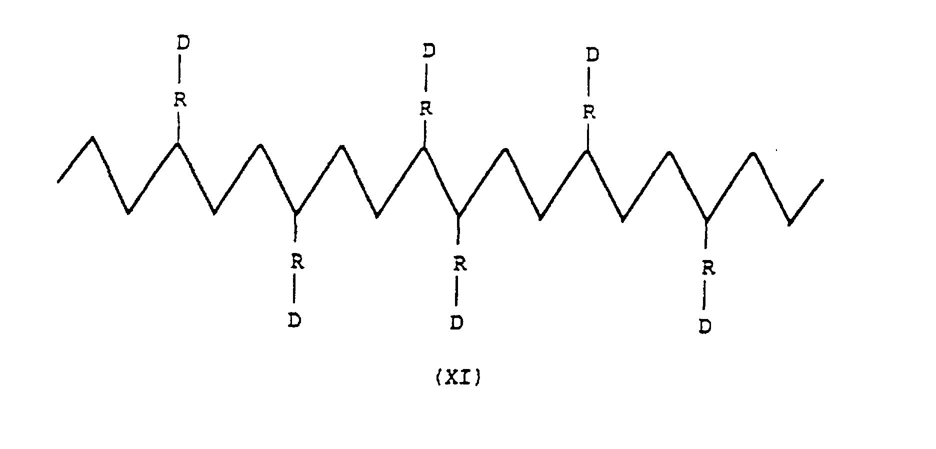

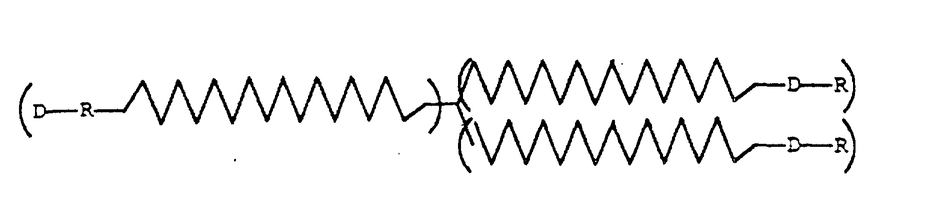

Gut zugänglich sind insbesondere Stoffe, bei denen -R- für eine Estergruppe steht und die durch Addition von Dicyclopentadien (DCPD) an polyfunktionelle Polycarbonsäuren erhalten werden können. Für einen hohen Umsatz kann dabei die Verwendung von Katalysatoren, z.B. Bortrifluoridetherat notwendig sein.

Sehr leicht zugänglich sind die Addukte von Maleinsäureanhydrid und Wasser an DCPD gemäß den Formeln (XIII) und (XIV).

Bei Addukten der Formeln (XIII) und (XIV) und bei erfindungsgemäßen reaktiven, präpolymeren Stoffen, die auf diesen beruhen, wird nicht zwischen den Isomeren Fumarsäure und Maleinsäure unterschieden, es bilden sich in Abhängigkeit von den Reaktionsbedingungen unterschiedliche Anteile der Isomeren. Beliebige Mischungen liegen innerhalb des Anspruchs der vorliegenden Erfindung.

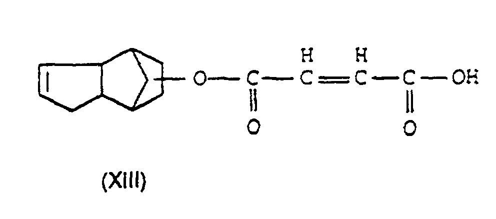

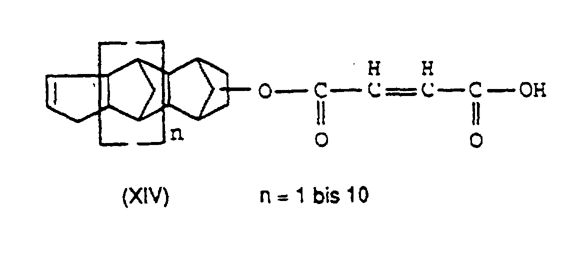

Mit diesen Stoffen sind die in dem erfindungsgemäßen Verfahren einzusetzenden Stoffe durch Umsetzung mit carboxylreaktiven Polymeren leicht erhältlich. Solche carboxylreaktiven Polymere sind z.B. mono- und polyfunktionelle polymere Hydroxyverbindungen, Carbonsäureester von mono- und polyfunktionellen polymeren Hydroxylverbindungen, mono- und polyfunktionelle polymere Epoxyde, hydroxyfunktionelle natürliche Öle und Harze, epoxydierte natürliche Öle und Harze, mono- und polyfunktionelle polymere Isocyanate sowie mono- und polyfunktionelle polymere Amine.

Dihydrodicyclopentadienol der Formel (XV) und Isoprenol der Formel (Va) sind kommerziell verfügbar und können zum Aufbau der erfindungsgemäßen Stoffe durch Umsetzung mit Stoffen, die mit OH-Gruppen reaktiv sind, eingesetzt werden.

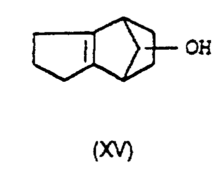

Weiter können Gruppen mit allylständigen Wasserstoffatomen eingeführt werden über die Imide von zyklischen ungesättigten Dicarbonsäuren mit Aminocarbonsäuren oder Aminoalkoholen. Beispiele zeigen die Formeln (XVI) und (XVII). Weitere Stoffe mit leicht abstrahierbaren H-Atomen und OH-Gruppen sind Endometylentetrahydrophthalsäure und deren Abkömmlinge wie Methylendometylentetrahydrophthalsäure oder Endometylentetrahydrophthalsäureimidole der Formel (XVI) 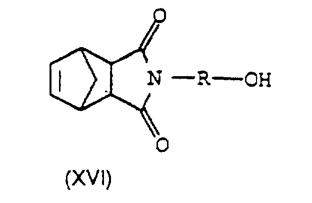 und Tetrahydrophthalsäure und deren Abkömmlinge wie Methyltetrahydrophthalsäure und Tetrahydrophthalsäureimidole der Formel (XVII)

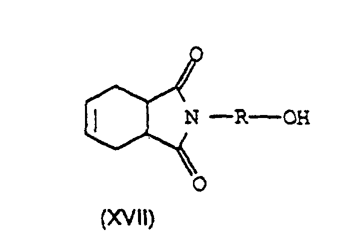

Diese sind zum Aufbau der erfindungsgemäßen Stoffe durch Umsetzung mit Stoffen, die mit OH-Gruppen reaktiv sind, geeignet.

Enthalten die erfindungsgemäß zu verwendenden Stoffe Doppelbindungen in der Polymerkette, z.B. als Maleinsäure- oder Fumarsäure- oder Ithaconsäureester, so werden durch Pfropfung mit Cyclopentadien Endomethylentetrahydrophthalsäurerestrukturen der Formel (XVIII) erzeugt, die ebenfalls erfindungsgemäß leicht abstrahierbare H-Atome aufweisen.

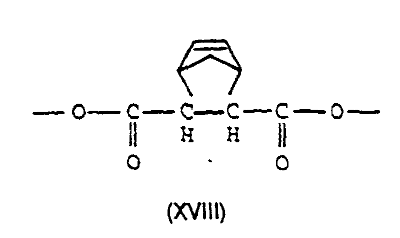

Weiter werden Abkömmlinge zyklischer Dicarbonsäuren mit allyständigem Wasserstoff durch Diels-Alder-Reaktion von maleinsäurehaltigen Polyestern mit weiteren Dienen wie Butadien oder Pentadien erhalten.

Eine wichtige Klasse von erfindungsgemäß einzusetzenden Stoffen sind die Ester von Stoffen der Formeln (XIII) und (XIV) sowie der Malein- und Fumarsäurehalbester des Isoprenols mit alkoxylierten Mono- und Polyolen, wobei jeweils zwischen 2 und 2000 Ethylenoxid- bzw. Propylenoxideinheiten pro Molekül eingebaut sein können, wie z.B. ethoxyliertem oder propoxyliertem Trimethylolpropan, ethoxyliertem oder propoxyliertem Pentaerythrit, ethoxyliertem oder propoxyliertem Glycerin, Polyethylenglykolmonoalkylether, Polypropylenglykolmonoalkylether, Polyester- und Polyetherpolyolen vom Typ Polyethylenoxyd, Polypropylenoxyd, Polytetrahydrofuran und Polycaprolacton. Die Einführung einer molekülinhärenten Strukturviskosität und eine verbesserte Elastizität der ausgehärteten Stoffe wird durch den Einbau von langkettigen Polyethylenterephthalateinheiten oder Polybutadiendiol erreicht. Ebenso kommen Ester der genannten Hydroxyverbindungen mit den Halbestern von Alkoholen mit leicht abstrahierbaren H-Atomen in Frage, z.B. Furfurylalkohol, Tetrahydrofurfurylalkohol, 1-Alkylalkenole oder Stoffen laut Formeln (XVI) und (XVII) mit Dicarbonsäuren, z.B. Maleinsäure, Fumarsäure, Itaconsäure, Citraconsäure, Phthalsäure und deren Isomeren in Betracht.

Durch die Art der Alkoxylierungsmittel und den Grad der Alkoxylierung lassen sich bei solchen erfindungsgemäßen Stoffen auch Eigenschaften der Endprodukte wie z. B. Härte, Hydrophilie und Elastizität steuern. Die Polyole können dabei auch nur z.T. verestert sein, wobei die restlichen Hydroxylgruppen entweder frei bleiben oder mit anderen Stoffen, mit oder ohne leicht abstrahierbaren H-Atomen, verestert oder verethert oder mit anderen reaktiven Stoffen umgesetzt sein können. Hierfür kommen z.B. Isocyanate oder Epoxyde in Frage. Weiter sind von Bedeutung hydroxylgruppenhaltige natürliche Öle wie z.B. Rizinusöl. Eine weitere wichtige Stoffklasse sind ungesättigte Polyesterharze auf Basis von α,β-ungesättigten Carbonsäuren wie Maleinsäure, Fumarsäure, Itaconsäure und/oder Citraconsäure mit Struktureinheiten mit leicht abstrahierbaren H-Atomen. Wie bereits oben erwähnt, sind ungesättigte Polyesterharze mit Struktureinheiten des DCPD's, die gelöst in monomeren Reaktivverdünnern wie Styrol, α-Methylstyrol, Vinyltoluol, Allylphthalat, Acrylaten, Vinylaten o.ä. verwendet werden, Gegenstand zahlreicher Patente. Die Mitverwendung dieser Reaktivverdünner, die im Falle von z.B. Pulverlacken auch feste Stoffe sein können, wird nach dem Stand der Technik wegen der unzureichenden Homopolymerisationsfähigkeit der Malein- bzw. Fumarsäuredoppelbindungen für unumgänglich gehalten.

Ungesättigte Polyesterharze im Sinne der vorliegenden Erfindung sind an sich bekannte Polyester, die Struktureinheiten mit leicht abstrahierbaren H-Atomen enthalten. Der Aufbau der erfindungsgemäß zu verwendenden Polyester erfolgt nach Verfahren des bekannten Standes der Technik zur Herstellung von Polyestern, in der Regel durch Polykondensation von mehrfach funktionellen Hydroxylverbindungen mit mehrfach funktionellen Säuren bzw. deren Anhydriden bei höheren Temperaturen. Weiter ist es oft vorteilhaft, von den Estern solcher Stoffe auszugehen, und die Polyester durch Umesterung bei höheren Temperaturen zu erzeugen, weil solche Umesterungen in einigen Fällen leichter und schneller ablaufen als die direkte Veresterung. Weiter können durch (Mit)-Verwendung von mehrfach funktionellen Aminen auch Bindemittel mit Amidstrukturen erhalten werden. Auch die Mitverwendung monofunktioneller Einsatzstoffe ist möglich, z.B. um das Molekulargewicht zu regulieren. Die im folgenden aufgeführten Einsatzstoffe sollen lediglich als Beispiele zur Verdeutlichung der Erfindung dienen.

Geeignete Einsatzstoffe sind z.B.: Di- und Polycarbonsäuren, wie Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellithsäure, Pyromellithsäure, Di- und Polyole, wie Ethylenglykol, Polyethylenglykole, Propylenglykol, Polypropylenglykole, Butandiolisomere, Hexandiol, Neopentylglykol, Trimethylolpropan, Glyzerin, Pentaerythrit, BisphenolA, hydriertes BisphenolA, OH-polyfunktionelle Polymere, wie hydroxylgruppenmodifizierte Polybutadiene oder hydroxylgruppentragende Polyurethanpräpolymere und Epoxydharze, polyfunktionelle Naturstoffe oder deren Folgeprodukte wie Leinölfettsäure. Von Bedeutung sind auch alkoxylierte OH-funktionelle Stoffe, z.B. die Ethoxylierungs- und Propoxylierungsprodukte der genannten Polyole.

Auch die Einführung von Amid- und Imidstrukturen ist gemäß DE-A-15700323 bekannter Stand der Technik. Solche Polyesteramide oder Polyesterimide können besondere Anforderungen, z.B. bezüglich der Wärmebeständigkeit, häufig besser erfüllen als reine Polyester. Der Aufbau der Polyester im Rahmen der vorliegenden Erfindung, mit speziellen Anforderungen z.B. an Härte, Elastizität, Viskosität bzw. Erweichungspunkt erfolgt nach den dem Fachmann bekannten Regeln. So ist es z.B. dem Fachmann bekannt, die Elastizität ausgehärteter Polyesterharze durch die Kettenlänge der Polyole oder Polycarbonsäuren zu variieren. Zum Beispiel sind Polyesterharze, die mit Hexandiol oder Adipinsäure aufgebaut sind, flexibler als solche auf Basis Phthalsäure und Ethylenglykol. Weiter ist die Steuerung der Eigenschaften über die Mitverwendung von polyfunktionellen Stoffen, die Verzweigung in den Polyestermolekülen erzeugen, wie Trimellithsäure oder Trimethylolpropan, dem Fachmann bekannt. Die Art der Einführung von Strukturteilen mit leicht abstrahierbaren H-Atomen in die Polyester kann dabei z.B. über die Mitverwendung von einkondensierbaren Ausgangsstoffen, welche leicht abstrahierbare H-Atome tragen, erfolgen. Leicht und kostengünstig zugängliche Ausgangsstoffe dieser Art sind die Addukte von Maleinsäureanhydrid und Wasser an DCPD, laut Formeln (XIII) und (XIV), die zum Aufbau der Polyester mit eingesetzt werden können.

Weiter kann Dihydrodicyclopentadienol laut Formel (XV) beim Aufbau der Polyester mitverwendet werden, wodurch ebenfalls Strukturen mit leicht abstrahierbaren H-Atomen eingeführt werden.

Weitere Stoffe zum Aufbau von Polyestern mit Strukturteilen mit leicht abstrahierbaren H-Atomen sind z.B. 1-Methylalkenole, Tetrahydrophthalsäureaminoalkanole laut Formel (XVI), Endomethylentetrahydrophthalsäureaminoalkanole laut Formel (XVII), Isoprenol, Furfürol und Tetrahydrofurfurol.

Die meisten ungesättigten Polyester sind sehr hochviskose oder feste Harze. Ein besonderer Aspekt der vorliegenden Erfindung ist die Mitverwendung erfindungsgemäßer Stoffe der Formeln (XI) und (XII), die keine üblichen Polyesterharze und z.T. niedrigviskose Flüssigkeiten mit sehr hohem Siedepunkt sind; sie stellen also speziell auf die erfindungsgemäßen Systeme abgestimmte Reaktiwerdünner dar, ohne die Nachteile der bekannten acrylisch oder vinylisch ungesättigten monomeren Reaktivverdünner wie z.B. Styrol oder monomere Acrylate. Diese Stoffe tragen mehrfach die reaktiven Gruppen mit leicht abstrahierbaren H-Atomen oder enthalten diese Gruppen in hoher molarer Konzentration, im Falle von Monoestern niedriger Alkohole oder Diole mit Stoffen der Formeln (XIII) und (XIV); sie sind somit hochreaktive Vernetzer, die in vielen Fällen allein verwendet werden können, die aber bevorzugt anteilig in üblichen linearen oder niedrigverzweigten Polyesterharzen enthalten sind.

Damit ist es möglich, den anwendungstechnisch wichtigen Erweichungs- bzw. Viskositätsbereich einzustellen, ohne daß dadurch bei Verarbeitung und Härtung höhere Emissionen generiert werden. So können Polyester mit relativ hoher Schmelzviskosität und hohem Erweichungspunkt für die vorliegende Erfindung verwendet und die gewünschte niedrige Verarbeitungsviskosität durch Zugabe dieser Stoffe eingestellt werden. Es können auch Polyester mitverwendet werden, die an sich schon bekannt sind. Die Reaktivität der Stoffe mit sich selbst, und besonders die erfindungsgemäßen reaktiven Mischungen von ungesättigten Polyesterharzen mit polyfunktionellen Stoffen, die keine Polyester sind, und den Formeln (XIII) und (XIV) entsprechen, zur Vernetzung ohne die Mitverwendung von monomeren oder auch polymeren Reaktivverdünnern, sind neu.

Die erfindungsgemäß einzusetzenden reaktiven, präpolymeren Stoffe können nach Zusatz von Stoffen, die beim Erhitzen Radikale bilden, thermisch härten. Bekannte Radikalbildner sind z.B. Peroxide, Azoverbindungen, Azide und C-C-labile Stoffe. Eine erhebliche Beschleunigung der Härtung, bzw. Absenkung der Härtungstemperatur, ist mit Metallcoinitiatoren wie z.B. Kobalt-, Mangan-, Eisen-, Nickel- oder Bleiverbindungen möglich.

Weiter weisen die erfindungsgemäßen Polymere in Gegenwart von UV-Initiatoren vom Typ der α-Spalter (Norrish-Typ1) oder der H-Donor/Akzeptor-Systeme (Norrish-Typ2) eine hohe UV-Empfindlichkeit auf.

Es ist auch möglich, erfindungsgemäß einzusetzende Stoffe herzustellen, die eine erhöhte Lichtempfindlichkeit dadurch aufweisen, daß sie im Molekül H-Akzeptor--Gruppen tragen, die z.B. eingebaut werden können über hydroxyfunktionelle Phenonverbindungen, wie z.B. Hydroxy- oder Bishydroxy-Benzophenon.

Die erfindungsgemäß einzusetzenden Stoffe können für sich allein oder zusammen mit anderen Bindemitteln und/oder organischen und/oder anorganischen Füllstoffen, als Lackbindemittel, Überzugsmassen, zur Herstellung kompakter oder zelliger, verstärkter oder unverstärkter Formstoffe, Vergußmassen, Elektroisoliermassen, tageslichthärtbarer Straßenmarkierungsfarben, Dicht- und Überzugsmittel, als Druckfarbenbindemittel, Klebemittel, als Bindemittel für geordnete und wirre, flächige oder beliebig geformte Faserträgermaterialien aus organischen oder anorganischen Stoffen eingesetzt werden.

Die erfindungsgemäßen Stoffe sind in der Regel flüssig und können direkt verwendet werden. Sind sie zu hochviskos zur Verarbeitung oder fest, können sie auch erwärmt, geschmolzen oder in Lösemittel gelöst oder in Wasser dispergiert angewendet werden.

### Beispiel 1

In einem Rührkolben mit Heizung und Destilliervorrichtung wurden eingewogen
661,10 g Dicyclopentadien (5,0 Mol) und
490,30 g Maleinsäureanhydrid (5,0 Mol).

Die Mischung wurde unter einem leichten Stickstoffstrom auf 125°C erhitzt und dann über einen Tropftrichter innerhalb einer Stunde
95,00 g Wasser (5,0 Mol + 5 g)
zugegeben. Es wurde bei 125°C eine Stunde nachreagieren lassen. Es bildete sich eine Monocarbonsäure der Formel (XIII), die leicht abstrahierbare H-Atome aufweist. Der Kolbeninhalt wurde auf 70°C abgekühlt. Dann wurden zugegeben
1730,00 g Ethoxylierungsprodukt aus Trimethylolpropan und Ethylenoxyd mit einer OH-Zahl von 165
4,00 g Dibutylzinndilaurat und
4,00 g Hydrochinon.

Unter einem leichten Stickstoffstrom wurde rasch auf 120°C aufgeheizt. Dann wurde innerhalb von 6 Stunden die Temperatur allmählich auf 190°C erhöht und das entstehende Kondensationswasser abdestilliert. Es resultierte eine hochviskose Flüssigkeit mit einer Säurezahl von 18.

### Beispiel 2

In einem Rührkolben mit Heizung und Destilliervorrichtung wurden
490,80 g Maleinsäureanhydrid (5,0 Mol) eingewogen,
unter einem leichten Stickstoffstrom auf 100°C erhitzt und dann über einen Tropftrichter innerhalb einer Stunde
444,80 g Isoprenol (5,1 Mol) (2-Methyl-buten-1-ol-4)
zugegeben. Dabei erfolgte eine leicht exotherme Reaktion. Man ließ noch bei 125°C eine Stunde nachreagieren. Es wurde ein Halbester von Maleinsäure/Fumarsäure mit Isoprenol gebildet, der leicht abstrahierbare H-Atome aufweist. Der Kolbeninhalt wurde auf 70°C abgekühlt. Dann wurden zugegeben
1730,00 g Ethoxylierungsprodukt aus Trimethylolpropan und Ethylenoxyd mit einer OH-Zahl von 165
4,00 g Dibutylzinndilaurat und
4,00 g Hydrochinon.

Unter einem leichten Stickstoffstrom wurde rasch auf 120°C aufgeheizt. Dann wurde innerhalb von 6 Stunden die Temperatur allmählich auf 190°C erhöht und das entstehende Kondensationswasser abdestilliert. Es resultierte eine hochviskose Flüssigkeit mit einer Säurezahl von 26.

### Beispiel 3

In einem Rührkolben mit Heizung und Destilliervorrichtung wurden eingewogen
490,30 g Maleinsäureanhydrid (5,0 Mol) und
913,10 g Tetrahydrophthalsäureaminoethanol (5,1 Mol) (Stoff laut Formel(XVII) mit R = -C₂H₄-)

Unter einem leichten Stickstoffstrom wurde aufgeheizt, ab ca. 70°C schmolz der Kolbeninhalt und es entwickelte sich eine exotherme Reaktion. Nach Abklingen der Reaktion wurde auf 125°C für eine Stunde nachgeheizt. Es wurde ein Halbester von Maleinsäure/Fumarsäure mit Tetrahydrophthalsäureaminoethanol gebildet, der leicht abstrahierbare H-Atome aufweist.

Der Kolbeninhalt wurde auf 70°C abgekühlt. Dann wurden zugegeben
1730,00 g Ethoxylierungsprodukt aus Trimethylolpropan und Ethylenoxyd mit einer OH-Zahl von 165 und
4,00 g Dibutylzinndilaurat.

Unter einem leichten Stickstoffstrom wurde rasch auf 120°C aufgeheizt. Dann wurde innerhalb von 6Stunden die Temperatur allmählich auf 190°C erhöht und das entstehende Kondensationswasser abdestilliert. Es resultierte ein weiches Harz mit einer Säurezahl von 31.

### Vergleichsbeispiel

In einem Rührkolben mit Heizung und Destilliervorrichtung wurden
490,30 g Maleinsäureanhydrid (5,0 Mol)
eingewogen und unter einem leichten Stickstoffstrom auf 100°C erhitzt. Dann wurde über einen Tropftrichter innerhalb einer Stunde
775,20 g 1,3-Phenoxypropanol (5,1 Mol)
zugegeben, wobei eine leicht exotherme Reaktion erfolgte. Man ließ noch bei 125°C eine Stunde nachreagieren. Es wurde der Halbester von Maleinsäure/Fumarsäure mit 1,3-Phenoxypropanol gebildet, der keine leicht abstrahlerbaren H-Atome aufwies. Der Kolbeninhalt wurde auf 70°C abgekühlt. Dann wurden zugegeben
1730,00 g Ethoxylierungsprodukt aus Trimethylolpropan und Ethylenoxyd mit einer OH-Zahl von 165
4,00 g Dibutylzinndilaurat und
4,00 g Hydrochinon

Unter einem leichten Stickstoffstrom wurde rasch auf 120°C aufgeheizt. Dann wurde innerhalb von 6 Stunden die Temperatur allmählich auf 190°C erhöht und das entstehende Kondensationswasser abdestilliert. Es resultierte eine mittelviskose Flüssigkeit mit einer Säurezahl von 18.

Prüfung der in den vorstehenden Beispielen und im Vergleichsbeispiel hergestellten Produkte auf Härtbarkeit

Die Verbindungen gemäß Beispiel 1 bis 3 und Vergleichsbeispiel wurden zur besseren Handhabbarkeit 80%ig in Metylethylketon gelöst. Den Lösungen wurden 4% t.-Butylperbenzoat und 3% Benzophenon, bezogen auf die Gesamtmenge der gelösten Stoffe, zugesetzt.

Die Lösungen wurden auf Stahlbleche in einer Schichtdicke von ca. 80µm aufgerakelt. Von den Filmen wurde das Lösemittel innerhalb von 3 Stunden im Vakuum bei 40°C entfernt. Es resultierten klebrige Filme. Die Filme wurden zunächst mit einer Quecksilberdrucklampe mit einer Energie von 80mW/cm² für 240 Sekunden bestrahlt. Dabei bildete sich bei den erfindungsgemäßen Beispielen eine klebfreie Haut, unter der noch klebrige Bestandteile vorhanden waren; die Klebrigkeit des Produktes des Vergleichsbeispiels hatte sich nicht geändert. Die Bleche wurden danach in einem Ofen bei 180°C 30 Minuten eingebrannt. Nach dem Abkühlen wurden bei den erfindungsgemäßen Beispielen harte, ethanolbeständige, biegefeste Filme erhalten; die Klebrigkeit des Produktes des Vergleichsbeispiels hatte sich auch durch das Einbrennen kaum verringert.

## Patentansprüche

1. Verfahren zur Herstellung von vernetzten polymeren organischen Verbindungen durch Vernetzen von präpolymeren, reaktiven organischen Verbindungen, die Struktureinheiten mit mindestens einer ethylenischen Doppelbindung aufweisen, mit präpolymeren, reaktiven organischen Verbindungen, die Struktureinheiten mit mindestens einem leicht abstrahierbaren H-Atom mit einer Bindungsenergie von maximal 397 kJ/mol enthalten, mit oder ohne radikalliefernde Initiatoren, durch Wärme und/oder energiereiche Strahlung, in Abwesenheit von ethylenisch ungesättigten monomeren Reaktivverdünnern.

2. Verfahren nach Anspruch 1, **dadurch gekennzeichnet, daß** zur Vernetzung präpolymere, reaktive organische Verbindungen eingesetzt werden, die Struktureinheiten mit mindestens einer ethylenischen Doppelbindung und Struktureinheiten mit mindestens einem leicht abstrahierbaren H-Atom mit einer Bindungungsenergie von maximal 397 kJ/mol im gleichen Molekül enthalten.

3. Verfahren nach Anspruch 1, **dadurch gekennzeichnet, daß** die leicht abstrahierbaren H-Atome in α-Stellung zu einer Doppelbindung (allylständige Wasserstoffatome) stehen.

4. Verfahren nach Anspruch 1 oder 2, **dadurch gekennzeichnet, daß** die leicht abstrahierbaren H-Atome über Strukturen der Formel (I), (II), (III) und/oder (IV) in die Präpolymeren eingebaut sind, 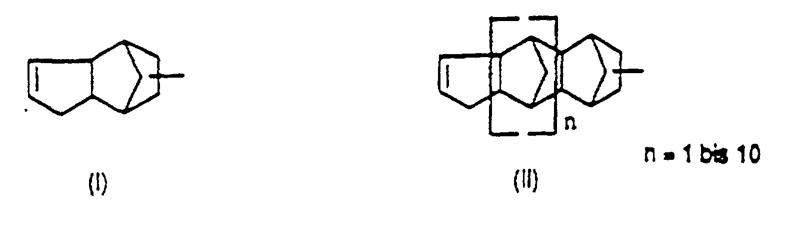 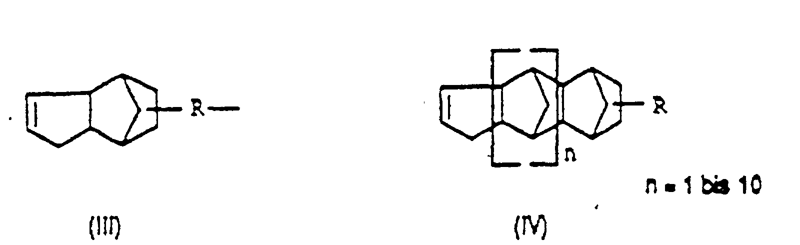 wobei -R- für Sauerstoff oder einen zweiwertigen Rest mit einer oder mehreren Ester-, Amid-, Urethan-, Ketongruppen oder eine salzartige Bindung steht.

5. Verfahren nach Anspruch 1 oder 2, **dadurch gekennzeichnet, daß** die leicht abstrahierbaren H-Atome über Strukturen der Formel (V) 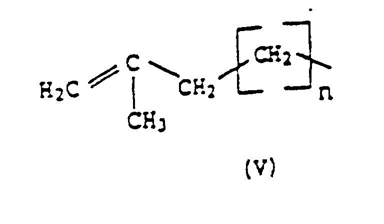 mit n = 1 bis 20
oder über Ester des Isoprenols eingebaut sind.

6. Verfahren nach Anspruch 1 oder 2, **dadurch gekennzeichnet, daß** die leicht abstrahierbaren H-Atome über Strukturen der Formel (VI) oder (VII) 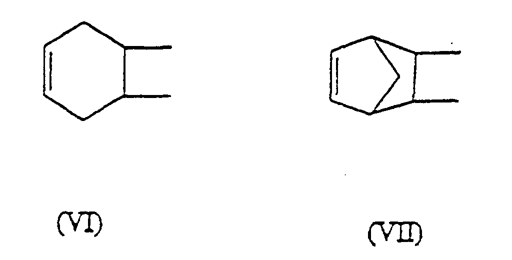 eingebaut sind.

7. Verfahren nach Anspruch 1 oder 2, **dadurch gekennzeichnet, daß** die leicht abstrahierbaren H-Atome über Strukturen der Formel (VIII) und/oder (IX) eingebaut sind.

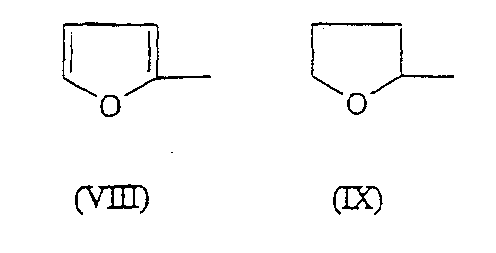

8. Verfahren nach Anspruch 1 oder 2, **dadurch gekennzeichnet, daß** die leicht abstrahierbaren H-Atome über Strukturen der Formel (X) eingebaut sind.

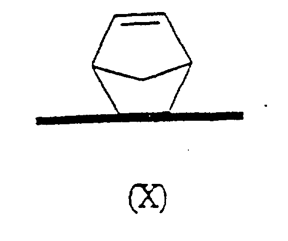

9. Verfahren nach einem der Ansprüche 4 bis 8, **dadurch gekennzeichnet, daß** die präpolymeren, reaktiven organischen Verbindungen ungesättigte Polyesterharze auf Basis von α,β-olefinisch ungesättigten Dicarbonsäuren sind, in die mindestens eine der Gruppen mit leichtabstrahierbaren H-Atomen der Formeln (I) bis (X) eingebaut ist.

10. Verfahren nach Anspruch 1, **dadurch gekennzeichnet, daß** die präpolymeren reaktiven organischen Verbindungen Gemische aus ungesättigten Polyesterharzen auf Basis von α,β-olefinisch ungesättigten Dicarbonsäuren ohne Gruppen mit leichtabstrahierbaren H-Atomen und polymeren organischen Verbindungen, die Gruppen mit leicht abstrahierbaren H-Atomen eingebaut enthalten.

11. Verfahren nach einem der vorherigen Ansprüche, **dadurch gekennzeichnet , daß** sich die präpolymeren, reaktiven organischen Verbindungen von monofunktionellen Alkoholen, polyfunktionellen Alkoholen, deren Alkoxylierungsprodukten, Polyetherpolyolen, Polyesterpolyolen, Polytetrahydrofuran und/oder Polycaprolakton ableiten, die terminal über Ester α,β-olefinisch ungesättigten Dicarbonsäuren gebundene Strukturteile mit leicht abstrahierbaren H-Atomen enthalten.

12. Verfahren nach Anspruch 1, **dadurch gekennzeichnet, daß** den präpolymeren, reaktiven organischen Verbindungen übliche radikalliefernde Stoffe, C-C-labile Stoffe und Reaktionsbeschleuniger, Stabilisatoren sowie weitere Zusatzstoffe aus der Gruppe Viskositätsregler, Verlaufs- und Glanzverbesserer zugesetzt werden.

13. Verfahren nach Anspruch 1, **dadurch gekennzeichnet, daß** bei der Vernetzung ein oder mehrere an sich bekannte Vernetzer aus der Gruppe polyfunktionelle Isocyanate, Aminoplastharze und polyfunktionelle Epoxyde mitverwendet werden.

## Claims

1. A process for preparing crosslinked polymeric organic compounds by crosslinking prepolymeric reactive organic compounds, having structural units having at least one ethylenic double bond, with prepolymeric reactive organic compounds containing structural units having at least one readily abstractable hydrogen with a bond energy of not more than 397 kJ/mol, with or without free-radical initiators, by means of heat and/or high-energy radiation, in the absence of ethylenically unsaturated monomeric reactive diluents.

2. A process as claimed in claim 1, wherein crosslinking is effected using prepolymeric reactive organic compounds containing in the same molecule structural units having at least one ethylenic double bond and structural units having at least one readily abstractable hydrogen with a bond energy of not more than 397 kJ/mol.

3. A process as claimed in claim 1, wherein the readily abstractable hydrogens are α to a double bond (allylic hydrogens).

4. A process as claimed in claim 1 or 2, wherein the readily abstractable hydrogens are incorporated into the prepolymers by way of structures of the formulae (I), (II), (III) and/or (IV), 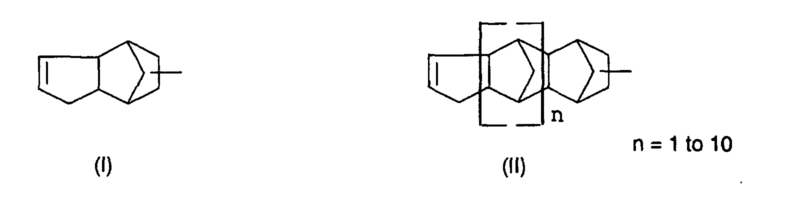 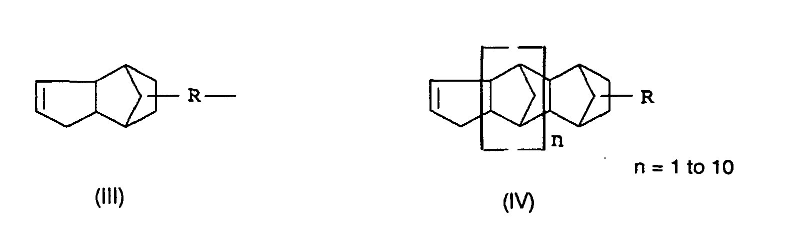 where -R- is oxygen or a divalent radical having one or more ester, amide, urethane and/or ketone groups or is a salt-type bond.

5. A process as claimed in claim 1 or 2, wherein the readily abstractable hydrogens are incorporated by way of structures of the formula (V) 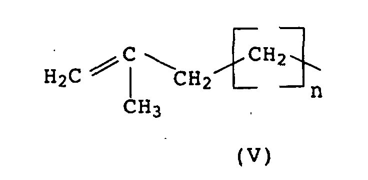 where n = 1 to 20
or by way of esters of isoprenol.

6. A process as claimed in claim 1 or 2, wherein the readily abstractable hydrogens are incorporated by way of structures of the formula (VI) or (VII)

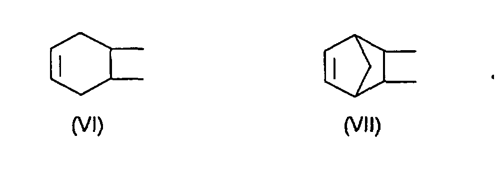

7. A process as claimed in claim 1 or 2, wherein the readily abstractable hydrogens are incorporated by way of structures of the formula (VIII) and/or (IX)

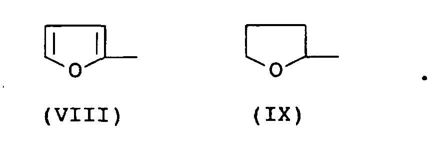

8. A process as claimed in claim 1 or 2, wherein the readily abstractable hydrogens are incorporated by way of structures of the formula (X)

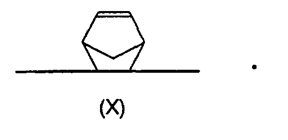

9. A process as claimed in any one of claims 4 to 8, wherein the prepolymeric reactive organic compounds are unsaturated polyester resins based on α,β-olefinically unsaturated dicarboxylic acids into which at least one of the groups containing readily abstractable hydrogens, of the formulae (I) to (X), has been incorporated.

10. A process as claimed in claim 1, wherein the prepolymeric reactive organic compounds [lacuna] mixtures of unsaturated polyester resins which are based on α,β-olefinically unsaturated dicarboxylic acids and are devoid of groups having readily abstractable hydrogens and prepolymeric organic compounds containing groups having readily abstractable hydrogens.

11. A process as claimed in any one of the previous claims, wherein the prepolymeric reactive organic compounds are derived from monofunctional alcohols, polyfunctional alcohols, alkoxylation products thereof, polyether polyols, polyester polyols, polytetrahydrofuran and/or polycaprolactone, which at the ends contain structural components which are attached by way of esters of α,β-olefinically unsaturated dicarboxylic acids and which have readily abstractable hydrogens.

12. A process as claimed in claim 1, wherein customary free-radical initiators, C-C-labile substances and reaction accelerators, stabilizers and further additives from the group consisting of viscosity regulators, flow improvers and gloss enhancers are added to the prepolymeric reactive organic compounds.

13. A process as claimed in claim 1, wherein crosslinking is carried out using one or more crosslinkers, known per se, selected from polyfunctional isocyanates, amino resins and polyfunctional epoxides.

## Revendications

1. Procédé de préparation de composés organiques polymères réticulés par réticulation de composés organiques prépolymères réactifs, présentant des unités structurelles comportant au moins une double liaison éthylénique, avec des composés organiques prépolymères réactifs contenant des unités structurelles comportant un atome de H aisément labile avec une énergie de liaison d'un maximum de 397 kJ/mole, avec ou sans initiateurs radicalaires, par la chaleur et/ou par rayonnement énergétique, en l'absence de diluants réactifs monomères éthyléniquement insaturés.

2. Procédé selon la revendication 1, **caractérisé en ce que** ce que l'on met en oeuvre, pour la réticulation, des composés organiques réactifs prépolymères contenant des unités structurelles comportant au moins une double liaison éthylénique et des unités structurelles comportant un atome de H aisément labile avec une énergie de liaison d'un maximum de 397 kJ/mole dans la même molécule.

3. Procédé selon la revendication 1, **caractérisé en ce que** les atomes de H labiles se trouvent en position α vis-à-vis d'une double liaison (atome d'hydrogène en position allyle).

4. Procédé selon la revendication 1 ou 2, **caractérisé en ce que** les atomes de H labiles sont incorporés aux prépolymères via des structures des formules (I), (II), (III) et/ou (IV). 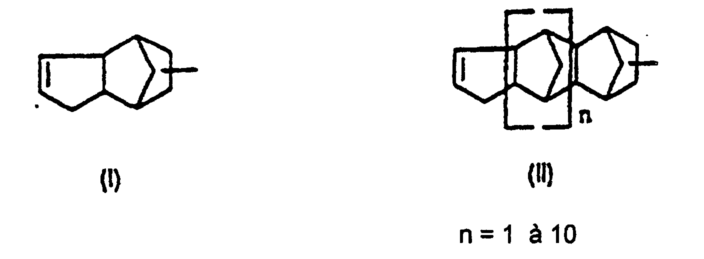 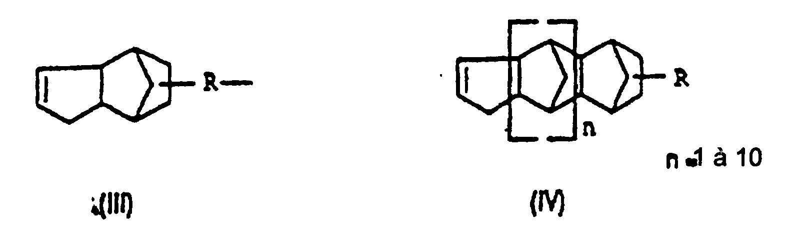 où -R- représente de l'oxygène ou un reste bivalent comportant un ou plusieurs groupes ester, amide, uréthanne, cétone, ou une liaison saline.

5. Procédé selon la revendication 1 ou 2, **caractérisé en ce que** les atomes de H labiles sont incorporés via des structures de la formule (V) 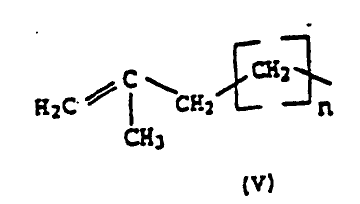 avec n = 1 à 20
ou via des esters d'isoprénol.

6. Procédé selon la revendication 1 ou 2, **caractérisé en ce que** les atomes de H labiles sont incorporés via des structures des formules (VI) ou (VII)

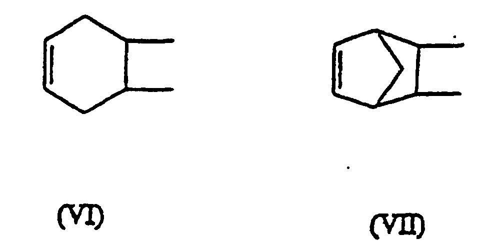

7. Procédé selon la revendication 1 ou 2, **caractérisé en ce que** les atomes de H labiles sont incorporés via des structures des formules (VIII) et/ou (IX).

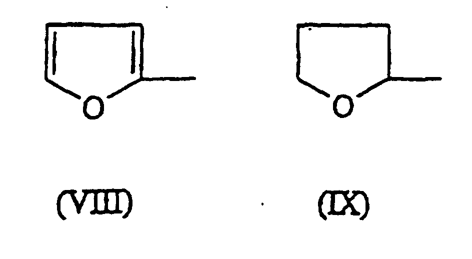

8. Procédé selon la revendication 1 ou 2, **caractérisé en ce que** les atomes de H labiles sont incorporés via des structures de la formule (X).

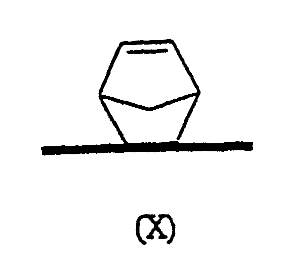

9. Procédé selon l'une des revendications 4 à 8, **caractérisé en ce que** les composés organiques prépolymères réactifs sont des résines polyesters insaturées à base d'acides dicarboxyliques α,β-insaturés, dans lesquelles est incorporé au moins un des groupes à atomes de H labiles des formules (I) à (X).

10. Procédé selon la revendication 1, **caractérisé en ce que** les composés organiques prépolymères réactifs sont des mélanges de résines polyesters insaturées à base d'acides dicarboxyliques α,β-insaturés sans groupes à atomes de H labiles et de composés organiques polymères contenant des groupes incorporés à atomes de H labiles.

11. Procédé selon l'une des revendications qui précèdent, **caractérisé en ce que** les composés organiques prépolymères réactifs dérivent d'alcools monofonctionnels, d'alcools polyfonctionnels, de leurs produits d'alcoxylation, de polyétherpolyols, de polyesterpolyols, de polytétrahydrofuranne et/ou de polycaprolactone, contenant en position terminale des parties structurelles liées via des esters d'acides dicarboxyliques α,β-insaturés à atomes de H labiles.

12. Procédé selon la revendication 1, **caractérisé en ce que** les composés organiques prépolymères réactifs sont additionnés de substances usuelles formant des radicaux, de substances à liaison C-C labile et d'accélérateurs de réaction, de stabilisants et d'autres additifs du groupe des régulateurs de viscosité, des agents d'amélioration de la fluidité et du brillant.

13. Procédé selon la revendication 1, **caractérisé en ce que**, lors de la réticulation, on utilise conjointement un ou plusieurs réticulants en soi connus, du groupe des isocyanates polyfonctionnels, des résines aminoplastes et des époxydes polyfonctionnels.
